# EUROPÄISCHE PATENTANMELDUNG

(11) **EP 1 995 128 A1**
(43) Veröffentlichungstag der Anmeldung: **26.11.2008**
(21) Anmeldenummer: 07010399.9
(22) Anmeldetag: 24.05.2007
(51) Int. Cl.: B60R 21/231

(54) **Luftsackmodul mit Druckspeichereinrichtung**

(71) Anmelder: Delphi Technologies, Inc., Troy, Michigan 48007 (US)
(72) Erfinder: Guthke, Detlev, 58089 Hagen (DE); Maiwald, Helmut, 51515 Kürten (DE); Kreher, Andre-Stephan, 42119 Wuppertal (DE)
(74) Vertreter: Manitz, Finsterwald & Partner GbR

(57) **Zusammenfassung**

Die Erfindung betrifft ein Luftsackmodul mit einem Luftsack, einem Gasgenerator zum Aufblasen des Luftsacks und einer Druckspeichereinrichtung, welche den Gasdruck in einem Schutzbereich (24) des Luftsacks während einer vorbestimmten Zeitdauer nach dem Aufblasen des Luftsacks entgegen einem natürlichen Druckverlust oberhalb einer sicherheitskritischen Druckuntergrenze hält.

## Beschreibung

Die Erfindung betrifft ein Luftsackmodul mit einem Luftsack und einem Gasgenerator zum Aufblasen des Luftsacks.

Ein derartiges Luftsackmodul ist grundsätzlich bekannt. Bei dem Gasgenerator handelt es sich typischerweise um einen Kaltgasgenerator oder einen Heißgasgenerator. Heißgasgeneratoren besitzen gegenüber Kaltgasgeneratoren üblicherweise einen nicht unerheblichen Kostenvorteil. Allerdings besteht bei einem Heißgasgenerator grundsätzlich das Problem, dass sich das durch den Gasgenerator freigesetzte und den Luftsack füllende heiße Gas innerhalb kurzer Zeit abkühlt, was zur Folge hat, dass der Gasdruck in dem aufgeblasenen Luftsack abnimmt, so dass die Schutzfunktion des aufgeblasenen Luftsacks unter Umständen nicht über einen ausreichend langen Zeitraum nach Auslösung des Luftsackmoduls gewährleistet ist.

Der Erfindung liegt die Aufgabe zugrunde, ein Luftsackmodul mit einer verbesserten Schutzwirkung zu schaffen.

Zur Lösung der Aufgabe ist ein Luftsackmodul mit den Merkmalen des Anspruchs 1 vorgesehen.

Das erfindungsgemäße Luftsackmodul umfasst einen Luftsack, einen Gasgenerator zum Aufblasen des Luftsacks und eine Druckspeichereinrichtung, welche den Gasdruck in einem Schutzbereich des Luftsacks während einer vorbestimmten Zeitdauer nach dem Aufblasen des Luftsacks entgegen einem natürlichen Druckverlust oberhalb einer sicherheitskritischen Druckuntergrenze hält.

Als natürlicher Druckverlust wird hier derjenige Druckabfall bezeichnet, der aus dem Entweichen von Gas aus dem Luftsack und/oder aus dem Abkühlen von durch einen Heißgasgenerator freigesetztem heißem Gas resultiert.

Unter der sicherheitskritischen Druckuntergrenze ist der Gasdruck zu verstehen, welcher in dem Schutzbereich des Luftsacks mindestens herrschen muss, damit der Aufprall einer Person auf den Luftsack wirksam durch den Luftsack abgefedert werden kann.

Als Schutzbereich wird ferner derjenige Bereich des Luftsacks bezeichnet, in welchem bei einem Unfall, der zu einer Auslösung des Luftsackmoduls führt, mit einem Aufprall einer zu schützenden Person zu rechnen ist.
Somit steht der Schutzbereich im Gegensatz zu einem so genannten "toten Bereich" des Luftsacks, in welchem der Aufprall einer zu schützenden Person unwahrscheinlich ist.

Die erfindungsgemäß vorgesehene Druckspeichereinrichtung verhindert, dass der Sollgasdruck während einer vorbestimmten Zeitdauer nach dem Aufblasen des Luftsacks unter den für die angestrebte Schutzwirkung des Luftsacks erforderlichen Mindestgasdruck absinkt. Bevorzugt ist die Druckspeichereinrichtung so ausgebildet, dass sie den Gasdruck in dem Luftsack während der vorbestimmten Zeitdauer zumindest annähernd konstant hält.

Der durch das Entweichen von Gas aus dem Luftsack und/oder das Abkühlen von durch einen Heißgasgenerator freigesetztem heißem Gas bedingte natürliche Druckabfall in dem aufgeblasenen Luftsack wird durch die Druckspeichereinrichtung für eine gewisse Zeit also verlangsamt oder sogar aufgehalten, so dass über einen längeren Zeitraum hinweg ein die Sicherheit einer zu schützenden Person gewährleistender Gasdruck in dem Luftsack herrscht und eine optimale Schutzfunktion des aufgeblasenen Luftsacks sichergestellt ist.

Die Rate, mit welcher der natürliche Druckabfall durch die Druckspeichereinrichtung verlangsamt wird, bzw. der Wert, auf welchem der Gasdruck während der vorbestimmten Zeitdauer zumindest annähernd konstant gehalten wird, lässt sich durch eine geeignete Ausbildung der Druckspeichereinrichtung vorgeben.

Auch die vorbestimmte Zeitdauer, während der die Druckspeichereinrichtung den Gasdruck in dem Schutzbereich des aufgeblasenen Luftsacks oberhalb der sicherheitskritischen Druckuntergrenze hält, ist durch die Konfiguration bzw. die Dimensionierung der Druckspeichereinrichtung einstellbar. Sie kann im Bereich mehrerer Sekunden liegen und z.B. 5 bis 6 Sekunden betragen.

Durch die Aufrechterhaltung eines erhöhten Gasdrucks in dem aufgeblasenen Luftsack über einen längeren Zeitraum und die somit verlängerte Standzeit des aufgeblasenen Luftsacks ist die Schutzwirkung des erfindungsgemäßen Luftsackmoduls gegenüber einem Luftsackmodul, welches über keine Druckspeichereinrichtung verfügt, deutlich verbessert. Dies gilt insbesondere für durch Heißgasgeneratoren aufblasbare Seiten- oder Kopfairbags für Kraftfahrzeuge, da diese Art von Airbag im Falle beispielsweise eines Fahrzeugquerüberschlags eine optimale Schutzwirkung über einen längeren Zeitraum hinweg gewährleisten muss, als dies beispielsweise bei einem Auffahrunfall der Fall ist.

Vorteilhafte Ausbildungen der Erfindung sind den Unteransprüchen, der Beschreibung und der Zeichnung zu entnehmen.

Gemäß einer vorteilhaften Ausführungsform ist die Druckspeichereinrichtung innerhalb des Luftsacks angeordnet. Hierdurch ist eine kompakte und Platz sparende Bauform des Luftsackmoduls sichergestellt.

Bevorzugt ist die Druckspeichereinrichtung zumindest teilweise durch den Luftsack selbst gebildet. Die Druckspeichereinrichtung ist mit anderen Worten integraler Bestandteil des Luftsacks, und die Baugröße des Luftsackmoduls bei zusammengefaltetem Luftsack ist durch die Druckspeichereinrichtung zumindest nicht wesentlich erhöht.

Die Druckspeichereinrichtung kann gleichzeitig mit dem Aufblasen des Luftsacks unter Druck setzbar sein. Die Druckspeichereinrichtung wird also erst nach der Auslösung des Luftsackmoduls "aufgeladen", d.h. in einen energiereichen Zustand versetzt, der es ihr ermöglicht, den Gasdruck in dem Luftsack während der vorbestimmten Zeitdauer nach dem Aufblasen des Luftsacks oberhalb der sicherheitskritischen Druckuntergrenze zu halten. Das Aufladen der Druckspeichereinrichtung erst während des Aufblasens des Luftsacks trägt dazu bei, dass das Luftsackmodul in seinem Ruhezustand, d.h. also vor der Zündung des Gasgenerators und bei zusammengefaltetem Luftsack eine minimale Baugröße aufweist.

Gemäß einer weiteren Ausführungsform umfasst die Druckspeichereinrichtung eine Druckkammer, die mit durch den Gasgenerator freigesetztem Gas befüllbar ist. Das durch den Gasgenerator freigesetzte Gas dient also nicht nur zum Aufblasen des Luftsacks, sondern ein Teil des Gases wird auch zum "Aufladen" der Druckspeichereinrichtung verwendet, indem es in die Druckkammer der Druckspeichereinrichtung geleitet wird. Die Druckkammer kann ein oder mehrere Kammersegmente aufweisen.

Vorteilhafterweise ist das Volumen der Druckkammer entgegen der Rückstellkraft eine Federeinrichtung vergrößerbar. Das "Aufladen" der Druckspeichereinrichtung bewirkt also ein unter Spannung setzen einer Federeinrichtung, d.h. die Energie des freigesetzten und in die Druckspeichereinrichtung einströmenden Gases wird in Verformungsenergie umgewandelt.

Gemäß einer weiteren Ausführungsform ist die Federeinrichtung durch ein die Druckkammer zumindest abschnittsweise umgebendes elastisches Material gebildet. Ein Aufblähen der Druckkammer durch in die Druckspeichereinrichtung einströmendes Gas bewirkt somit eine Dehnung des die Druckkammer umgebenden elastischen Materials entgegen dessen Rückstellkraft.

Gemäß einer besonders vorteilhaften Ausführungsform ist die Druckkammer durch zwei Lagen des Luftsacks begrenzt, die zumindest bereichsweise durch ein elastisches Material, z.B. in Form wenigstens eines elastischen Streifens oder Bandes, miteinander verbunden sind. Dies stellt eine besonders einfache und Material sparende Ausbildung einer zumindest teilweise durch den Luftsack selbst gebildeten Druckspeichereinrichtung dar.

Alternativ wäre es auch möglich, die Druckspeichereinrichtung in Form eines in dem Luftsack angeordneten, separaten Gassacks vorzusehen. Dieser separate Gassack könnte beispielsweise nach Art eines Luftballons teilweise oder vollständig aus einem elastischen Material, wie z.B. Gummi, gebildet sein, oder er könnte aus zwei miteinander vernähten Lagen eines Materials ähnlich demjenigen, aus welchem der Luftsack hergestellt ist, gebildet sein, wobei diese Materiallagen im Inneren des Gassacks durch Streifen oder Bänder eines elastischen Materials miteinander verbunden oder an ihrer Außenseite von Streifen oder Bändern eines elastischen Materials umgeben sein können.

Gemäß einer weiteren Ausführungsform ist die Druckkammer durch mindestens einen Gaskanal mit dem Schutzbereich des Luftsacks verbunden. Bei aufgeblasenem Luftsack und aufgeblähter Druckkammer der Druckspeichereinrichtung bewirkt die Rückstellkraft der angespannten Federeinrichtung eine Kontraktion der Druckkammer, die dazu führt, dass in der Druckspeichereinrichtung befindliches Gas durch den Gaskanal aus dem Druckraum in den Schutzbereich des Luftsacks verdrängt wird, sobald der Gasdruck in der Druckkammer größer als der Gasdruck in dem Schutzbereich des Luftsacks ist. Die Druckspeichereinrichtung bildet mit anderen Worten ein Gasreservoir, aus dem Gas in den Schutzbereich des Luftsacks nach geführt wird, wodurch der Gasdruck in dem Schutzbereich oberhalb der sicherheitskritischen Untergrenze gehalten wird, bis der Gasvorrat der Druckspeichereinrichtung erschöpft ist.

Wie bereits erwähnt wurde, lassen sich durch die spezielle Ausbildung der Druckspeichereinrichtung deren Wirkeigenschaften einstellen, insbesondere die Länge des Zeitraums, während dessen der Gasdruck in dem Schutzbereich des Luftsacks oberhalb der sicherheitskritischen Untergrenze gehalten werden soll. Die Faktoren, welche die Wirkeigenschaften der Druckspeichereinrichtung maßgeblich beeinflussen, sind zum einen das bei gegebenem Gasgenerator maximal erreichbare Volumen der Druckkammer sowie die Rückstelleigenschaften, insbesondere die Federkonstante, der Federeinrichtung. Letztere kann durch den Typ, die Menge und die Anordnung des elastischen Materials eingestellt werden.

Bei einem Aufprall einer zu schützenden Person auf den aufgeblasenen Luftsack wird der Luftsack zusammengedrückt, wodurch der Gasdruck in dem Schutzbereich des Luftsacks ansteigt. Dieser Druckanstieg resultiert in einer auf die aufprallende Person wirkenden Gegenkraft, die verhindert, dass die Person durch den Luftsack hindurch schlägt und z.B. auf ein Karosserieteil oder ein Fensterglas prallt. Um zu verhindern, dass die Gegenkraft geringer als für einen wirksamen Schutz der aufprallenden Person nötig ausfällt, weil ein Teil des in dem Schutzbereich des Luftsacks befindlichen Gases durch die aufprallende Person aus dem Schutzbereich in die Druckspeichereinrichtung oder in einen anderen Bereich des Luftsacks verdrängt wird, kann in dem oder jedem Gaskanal ein Einwegeventil vorgesehen sein, welches eine Gasströmung aus der Druckkammer in den Schutzbereich des Luftsacks zulässt und eine Gasströmung in der umgekehrten Richtung verhindert.

Gemäß einer weiteren Ausführungsform ist die Druckspeichereinrichtung in einem Bereich des Luftsacks angeordnet, der bei einem Unfall normalerweise keine unmittelbare Schutzfunktion zu erfüllen hat, d.h. also in einem so genannten "toten Bereich" des Luftsacks. Handelt es sich bei dem Luftsack beispielsweise um einen Kopf- bzw. Seitenairbag, der bei einem Unfall die linke oder rechte Innenseite eines Fahrzeugs abdeckt, kann die Druckspeichereinrichtung z.B. im Bereich einer B-Säule des Fahrzeugs angeordnet sein, da in diesem Bereich bei einem Unfall nicht mit einem Aufprall eines zu schützenden Fahrzeuginsassen zu rechnen ist.

Nachfolgend wird die Erfindung rein beispielhaft anhand einer vorteilhaften Ausführungsform unter Bezugnahme auf die beigefügte Zeichnung beschrieben. Es zeigen:
- Fig. 1: eine Seitenansicht eines erfindungsgemäßen Luftsackmoduls mit aufgeblasenem Luftsack;
- Fig. 2: eine Querschnittsansicht einer Druckspeichereinrichtung des Luftsackmoduls entlang der Linie A-A von Fig. 1; und
- Fig. 3: eine schematische Darstellung des Druckverlaufs als Funktion der Zeit in einem Luftsackmodul mit Druckspeichereinrichtung (durchgezogene Kurve) und in einem Luftsackmodul ohne Druckspeichereinrichtung (gestrichelte Kurve).

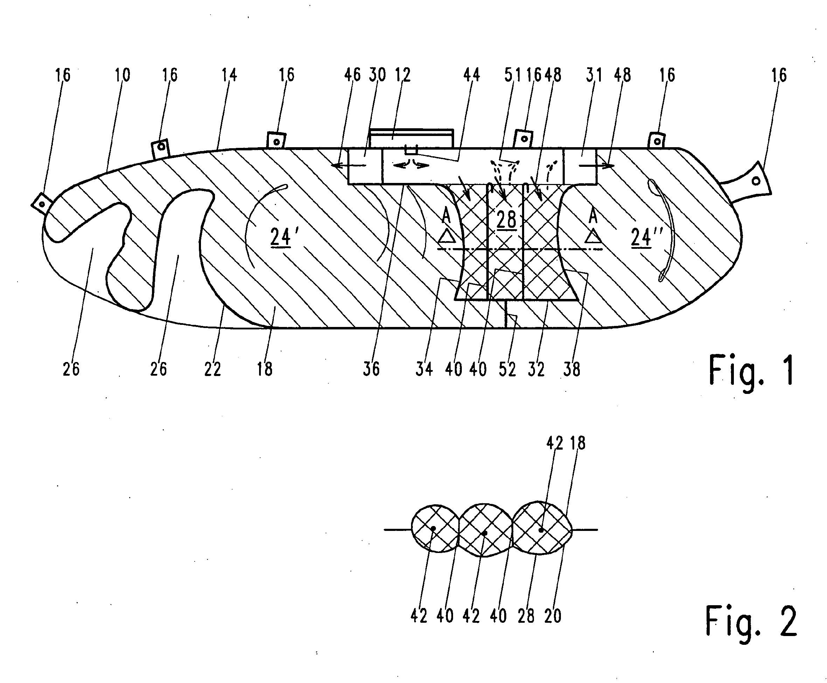

In Fig. 1 ist ein erfindungsgemäßes Luftsackmodul in Form eines Kopf- oder Seitenairbags dargestellt, welcher dazu dient, bei einem Unfall die linke oder rechte Innenseite eines Kraftfahrzeugs abzudecken, um so einen direkten Aufprall eines Fahrzeuginsassen auf eine Fensterscheibe oder einen Teil der Fahrzeugkarosserie zu verhindern.

Das Luftsackmodul umfasst einen Luftsack 10 sowie einen Gasgenerator 12 zum Aufblasen des Luftsacks 10. Bei dem Gasgenerator 12 handelt es sich um einen pyrotechnischen Heißgasgenerator 12, welcher bei seiner Zündung heißes Gas freisetzt, um den Luftsack 10 aufzublasen. Der Luftsack 10 ist in Fig. 1 in seinem aufgeblasenen Zustand gezeigt.

Der Gasgenerator 12 ist an einem (in Fig. 1) oberen Rand 14 des Luftsacks angeordnet. An dem oberen Rand 14 des Luftsacks 10 sind außerdem mehrere Befestigungslaschen 16 vorgesehen, die eine Befestigung des Luftsackmoduls an der Fahrzeugkarosserie, insbesondere im Bereich des Fahrzeugdachs, ermöglichen.

Der Luftsack 10 ist durch zwei übereinander liegende Lagen 18, 20 eines zumindest annähernd gasdichten flexiblen Gewebematerials gebildet. Die Materiallagen 18, 20 sind entlang einer umlaufenden Umfangsnaht 22 zumindest annähernd gasdicht miteinander verbunden, z.B. vernäht, verklebt und/oder verschweißt. Während in Fig. 1 nur die vordere Materiallage 18 dargestellt ist, kann man in der in Fig. 2 gezeigten Querschnittsansicht des Luftsacks 10 auch die hintere Materiallage 20 erkennen.

Die Umfangsnaht 22 definiert die Kontur eines Schutzbereichs 24 des Luftsacks 10 (in Fig. 1 einfach schraffiert). Unter dem Schutzbereich 24 werden alle diejenigen Bereiche des Luftsacks 10 subsumiert, die einen Fahrzeuginsassen schützen sollen, d.h. also die Bereiche, in denen bei einem "normalen", d.h. vorhersagbaren, Unfallhergang mit einem Aufprall einer Person zu rechnen ist.

Die Umfangsnaht 22 verläuft nicht durchgängig entlang eines äußeren Randes der Materiallagen 18, 20, sondern sie kann sich auch in das Innere der Materiallagen 18, 20 erstrecken, wie in Fig. 1 im linken Abschnitt des Schutzbereichs 24 zu erkennen ist. Die aus einem derartigen Nahtverlauf resultierenden Einbuchtungen 26 des Schutzbereichs 24 dienen dazu, in weniger sicherheitskritischen Bereichen des Luftsacks 10 das mit Gas zu befüllende Volumen des Luftsacks 10 zu verringern, wodurch ein schnelleres Aufblasen des Luftsacks 10 und bei einem Aufprall einer Person ein schnellerer Aufbau einer Gegenkraft in dem Schutzbereich 24 erreicht wird. Je nach Verlauf der Umfangsnaht 22 können die Einbuchtungen 26 dem aufgeblasenen Luftsack 10 außerdem zusätzliche Stabilität verleihen.

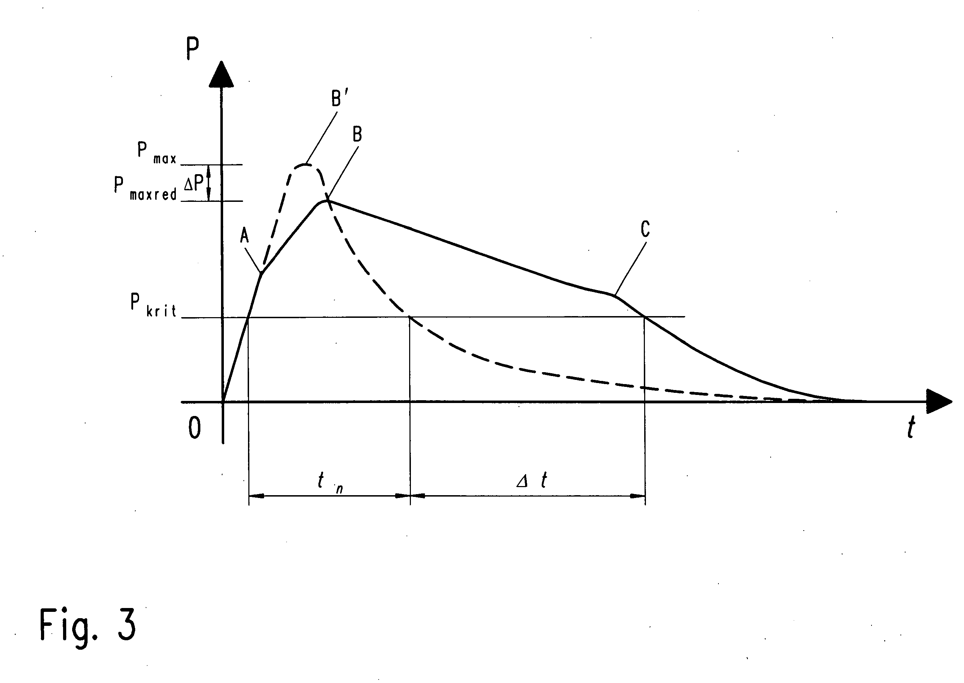

Aufgrund einer gewissen Gasundichtigkeit des Luftsacks 10 sowie einer Abkühlung des durch den Gasgenerator 12 freigesetzten heißen Gases besteht bei Luftsackmodulen der vorliegenden Art grundsätzlich das Problem, dass der Gasdruck in dem aufgeblasenen Luftsack 10 innerhalb einer gewissen Zeit unter eine sicherheitskritische Untergrenze Pₖᵣᵢₜ abfällt, unterhalb der die Sicherheit einer auf den Luftsack aufprallenden Person nicht mehr gewährleistet werden kann. So ist der gestrichelten Kurve von Fig. 3, die den Druckverlauf in einem herkömmlichen Luftsackmodul darstellt, zu entnehmen, dass der Gasdruck hier nur während einer vergleichsweise kurzen Zeit tₙ über Pₖᵣᵢₜ liegt.

Neuere Sicherheitsanforderungen sehen vor, dass der Luftsack 10 auch mehrere Sekunden, beispielsweise 5 bis 6 Sekunden, nach der Auslösung des Gasgenerators 12 noch einen Gasdruck aufweist, der oberhalb der sicherheitskritischen Untergrenze Pₖᵣᵢₜ liegt.

Um diese erhöhte Standzeitanforderung zu erfüllen, ist das erfindungsgemäße Luftsackmodul mit einer Druckspeichereinrichtung versehen. Die Druckspeichereinrichtung ist in einem weniger sicherheitskritischen Bereich des Luftsacks 10 angeordnet, d.h. in einem Bereich, in welchem bei einem typischen Unfallverlauf kein Aufprall eines Fahrzeuginsassen zu erwarten ist (so genannter "toter Bereich"), z.B. im Bereich einer B-Säule der Fahrzeugkarosserie.

Die Druckspeichereinrichtung umfasst eine in Fig. 1 und 2 doppelt schraffiert dargestellte Druckkammer 28, die gleichzeitig mit dem Schutzbereich 24 des Luftsacks 10 mit durch den Gasgenerator 10 freigesetztem Gas befüllbar ist und deren Inneres ausschließlich über zwei Einwegeventile 30, 31 mit dem Inneren des Schutzbereichs 24 in Verbindung steht.

Die Druckkammer 28 ist durch die Materiallagen 18, 20 begrenzt, und ihre Form wird durch den Verlauf einer Kammernaht 32 definiert, durch welche die Materiallagen 18, 20 zumindest annähernd gasdicht miteinander verbunden, z.B. vernäht, verschweißt und/oder verklebt, sind. Die Kammernaht 32 dient mit anderen Worten dazu, die Druckkammer 28 gastechnisch von dem Schutzbereich 24 zu trennen.

Im vorliegenden Ausführungsbeispiel weist die Druckkammer 28 in der Seitenansicht (Fig. 1) eine annähernd rechteckige Form auf, es sind aber auch andere Formen denkbar.

Die Druckkammer 28 ist zum oberen Rand 14 des Luftsacks 10 hin offen, so dass durch den Gasgenerator 12 freigesetztes Gas leicht in die Druckkammer 28 einströmen kann. Da der Gasgenerator 12 bei der dargestellten Ausführungsform in Richtung des oberen Randes 14 gesehen zu der Druckkammer 28 versetzt angeordnet ist, in Fig. 1 nach links versetzt, geht der dem Gasgenerator 12 zugewandte und zum oberen Luftsackrand 14 weisende Abschnitt 34 der Kammernaht 32 in einen im Wesentlichen parallel zum oberen Luftsackrand 14 verlaufenden Nahtabschnitt 36 über.

Das von der Druckkammer 28 wegweisende freie Ende des Nahtabschnitts 36 und ein diesem gegenüberliegender Bereich des oberen Luftsackrandes 14 begrenzen eines der Einwegeventile 30. Das andere Einwegeventil 31 ist durch einen dem Gasgenerator 12 zugewandten Abschnitt 34 gegenüberliegenden Abschnitt 38 der Kammernaht 32 und einem entsprechend zugeordneten Bereich des oberen Luftsackrandes 14 begrenzt.

Die Druckkammer 28 und die Einwegeventile 30, 31 sind so angeordnet bzw. ausgebildet, dass der Schutzbereich 24 und die Druckkammer 28 bei einer Auslösung des Gasgenerators 12 gleichmäßig mit durch den Gasgenerator 12 freigesetztem Gas befüllt werden.

Wie den Fig. 1 und 2 zu entnehmen ist, sind die die Druckkammer 28 begrenzenden Materiallagen 18, 20 nicht nur entlang der Kammernaht 32 miteinander verbunden, sondern sie sind darüber hinaus auch durch zwei elastische Materialstreifen 40 miteinander gekoppelt, die im Wesentlichen parallel zueinander und im Wesentlichen parallel zu den zum oberen Luftsackrand 14 weisenden Kammernahtabschnitten 34, 38 verlaufen. Durch die elastischen Materialstreifen 40 ist die Druckkammer 28 in drei sich im Wesentlichen rechtwinklig zum oberen Luftsackrand 14 erstreckende Kammersegmente 42 aufgeteilt.

Nachfolgend wird die Funktion der Druckspeichereinrichtung unter zusätzlicher Bezugnahme auf Fig. 3 erläutert, welche als durchgezogene Kurve den Druckverlauf in dem Luftsack 10 des erfindungsgemäßen Luftsackmoduls und als gestrichelte Kurve den Druckverlauf in einem entsprechenden Luftsack eines Luftsackmoduls ohne Druckspeichereinrichtung zeigt.

Bei einer Zündung des Gasgenerators 12 setzt dieser heißes Gas frei, welches durch eine Eintrittsöffnung 44 in den Luftsack 10 einströmt. Das in den Luftsack 10 einströmende Gas trifft auf den parallel zum oberen Luftsackrand 14 verlaufenden Nahtabschnitt 36 und wird durch diesen so abgelenkt, dass ein erster Teil des Gases, dargestellt durch den Pfeil 46, durch das eine Einwegeventil 30 in den Schutzbereich 24 und ein zweiter Teil des Gases, dargestellt durch den Pfeil 48, in die Druckkammer 28 und durch das andere Einwegeventil 30 in den Schutzbereich 24 strömt. Das durch den Gasgenerator 12 freigesetzte Gas füllt somit gleichzeitig den Schutzbereich 24 des Luftsacks 10 und die Druckkammer 28 und bewirkt einen Druckanstieg in dem Luftsack 10 (ansteigende Flanken der Kurven von Fig. 3).

Das in die Druckkammer 28 einströmende Gas bewirkt eine Aufblähung der Druckkammer 28, die durch das Auseinanderdrücken der Materiallagen 18, 20 zu einer Dehnung der zwischen die Materiallagen 18, 20 geschalteten elastischen Materialstreifen 40 führt. Die Druckkammer 28 wird mit anderen Worten entgegen der Rückstellkraft der elastischen Materialstreifen 40 aufgeblasen. Dabei können die elastischen Materialstreifen 40 so ausgebildet sein, dass eine Dehnung der Materialstreifen 40 bereits ab einem Gasdruck in der Druckkammer 28 von beispielsweise 0,2 bar Überdruck erfolgt. Der Beginn der Dehnung der Materialstreifen 40 ist durch den Punkt A der durchgezogenen Kurve in Fig. 3 markiert.

Der Gasgenerator 12 ist so ausgelegt, dass er den Schutzbereich 24 des Luftsacks 10 kurzzeitig auf einen Maximaldruck Pₘₐₓ aufblasen würde, wenn keine Druckspeichereinrichtung vorgesehen wäre (Punkt B' der gestrichelten Kurve von Fig. 3). Ferner nähme der Gasdruck in dem Schutzbereich 24 des Luftsacks 10 nach Erreichen des Maximaldrucks durch ein Entweichen des Gases aus dem Luftsack 10 und durch eine Abkühlung des Gases ohne Druckspeichereinrichtung innerhalb von Sekundenbruchteilen wieder ab (abfallende Flanke der gestrichelten Kurve von Fig. 3).

Durch die Druckspeichereinrichtung wird der tatsächlich erreichte Maximaldruck um ΔP auf P_{maxred} reduziert (Punkt B der durchgezogenen Kurve in Fig. 3). Die Nähte und das Gewebematerial des Luftsacks sind durch den reduzierten Maximaldruck P_{maxred} einer geringeren Belastung ausgesetzt und verändern sich somit weniger stark, wodurch auch eine aus Materialveränderungen resultierende Gasleckage verringert wird. Dies bewirkt, dass der natürliche Druckabfall in dem Schutzbereich 24 aufgrund von Gasverlust und Gasabkühlung verlangsamt wird (abfallende Flanke der durchgezogenen Kurve von Fig. 3 zwischen den Punkten B und C).

Zusätzlich wird die aufgeblähte Druckkammer 28 durch eine Rückstellung der gedehnten elastischen Materialstreifen 40 komprimiert, sobald der Gasdruck in dem Schutzbereich 24 unter den Gasdruck in der Druckkammer 28 sinkt. Hierdurch wird in der Druckkammer 28 befindliches Gas aus der Druckkammer 28 verdrängt, dargestellt durch die gestrichelten Pfeile 51, und durch die Einwegeventile 30, 31 in den Schutzbereich 24 des Luftsacks 10 gedrückt.

Die Druckspeichereinrichtung bildet mit anderen Worten also ein Gasreservoir, aus welchem unter Druck stehendes Gas solange in den Schutzbereich 24 des Luftsacks nachgeführt wird, bis sich die elastischen Materialstreifen 40 vollständig entspannt haben (Punkt C der durchgezogenen Kurve in Fig. 3).

Auf diese Weise ist es möglich, den Gasdruck in dem Luftsack 10 während eines Zeitraums auf einem die Sicherheit eines aufprallenden Fahrzeuginsassen gewährleistenden Gasdruck zu halten, der um Δt länger ist als bei einem entsprechenden Luftsack ohne Druckspeichereinrichtung. Als die Sicherheit gewährleistender Gasdruck wird hierbei ein Gasdruck bezeichnet, der oberhalb der sicherheitskritischen Druckgrenze Pₖᵣᵢₜ liegt. Die Druckspeichereinrichtung bewirkt mit anderen Worten also eine deutliche Verlängerung der Standzeit des aufgeblasenen Luftsacks 10, die je nach Konfiguration der Druckspeichereinrichtung beispielsweise 5 bis 6 Sekunden betragen kann.

Durch die Konfiguration der Druckspeichereinrichtung, insbesondere durch das bei gegebenem Gasgenerator 12 maximal erreichbare Volumen der Druckkammer 28 sowie durch eine geeignete Ausbildung der elastischen Materialstreifen 40, insbesondere durch eine geeignete Auswahl des Materials, der Form sowie der Anzahl der elastischen Materialstreifen 40, lässt sich die gewünschte Wirkung der Druckspeichereinrichtung und insbesondere die Höhe des aufrechtzuerhaltenden Gasdrucks sowie der Zeitraum, über den dieser Gasdruck aufrechterhalten wird, einstellen.

Die Einwegeventile 30, 31 verhindern, dass bei einem Aufprall einer Person auf den Schutzbereich 24 des Luftsacks 10 durch das Eindrücken des Luftsacks 10 verdrängtes Gas aus dem Schutzbereich 24 in die Druckkammer 28 strömen kann. Die Einwegeventile 30, 31 tragen somit dazu bei, das der Gasdruck in dem Schutzbereich 24 bei einem Aufprall einer Person auf den Luftsack 10 schneller ansteigt, wodurch die Schutzwirkung des Luftsackmoduls noch weiter erhöht ist.

Abschließend sei erwähnt, dass der Schutzbereich 24 ein einteiliger oder ein mehrteiliger Bereich sein kann. So weist der Schutzbereich 24 im vorliegenden Ausführungsbeispiel einen ersten Schutzbereichsabschnitt 24' und einen zweiten Schutzbereichsabschnitt 24" auf, welcher durch die Druckspeichereinrichtung sowie durch eine die Kammernaht 32 mit der Umfangsnaht 22 verbindende Trennnaht 52 von dem ersten Schutzbereichsabschnitt 24' getrennt ist.

Alternativ kann die Trennung der Abschnitte 24', 24" des Schutzbereichs 24 voneinander auch durch die Druckspeichereinrichtung allein erfolgen, indem auf die Trennnaht 52 verzichtet wird und stattdessen die Druckkammer 28 bis an den (in Fig. 1) unteren Rand des Luftsacks 10 ausgedehnt wird, so dass sich die Kammernahtabschnitte 34, 38 und die elastischen Materialstreifen 40 bis an den unteren Rand des Luftsacks 10 erstrecken.

Die Einstellung der Ausdehnung der Druckkammer 28 in Richtung des unteren Randes des Luftsacks 10 bzw. die Einstellung der Länge der Trennnaht 52 stellt außerdem eine Maßnahme zur Einstellung des Volumens der Druckkammer 28 und somit der Druckspeichereigenschaften der Druckspeichereinrichtung dar.

### Bezugszeichenliste

- 10: Luftsack
- 12: Gasgenerator
- 14: oberer Rand
- 16: Befestigungslasche
- 18: Materiallage
- 20: Materiallage
- 22: Umfangsnaht
- 24: Schutzbereich
- 26: Einbuchtung
- 28: Druckkammer
- 30: Einwegeventil
- 31: Einwegeventil
- 32: Kammernaht
- 34: Kammernahtabschnitt
- 36: Nahtabschnitt
- 38: Kammernahtabschnitt
- 40: elastischer Materialstreifen
- 42: Kammersegment
- 44: Eintrittsöffnung
- 46: Pfeil
- 50: Pfeil
- 51: Pfeil
- 52: Trennnaht

## Patentansprüche

1. Luftsackmodul mit einem Luftsack (10), einem Gasgenerator (12) zum Aufblasen des Luftsacks (10) und einer Druckspeichereinrichtung, welche den Gasdruck in einem Schutzbereich (24) des Luftsacks (10) während einer vorbestimmten Zeitdauer nach dem Aufblasen des Luftsacks (10) entgegen einem natürlichen Druckverlust oberhalb einer sicherheitskritischen Druckuntergrenze hält.

2. Vorrichtung nach Anspruch 1,
**dadurch gekennzeichnet, dass**
dass die Druckspeichereinrichtung so ausgebildet ist, dass sie den Gasdruck in dem Luftsack (10) während der vorbestimmten Zeitdauer zumindest annähernd konstant hält.

3. Vorrichtung nach Anspruch 1 oder 2,
**dadurch gekennzeichnet, dass**
dass die Druckspeichereinrichtung innerhalb des Luftsacks (10) angeordnet ist.

4. Vorrichtung nach zumindest einem der vorstehenden Ansprüche,
**dadurch gekennzeichnet, dass**
dass die Druckspeichereinrichtung zumindest teilweise durch den Luftsack (10) selbst gebildet ist.

5. Vorrichtung nach zumindest einem der vorstehenden Ansprüche,
**dadurch gekennzeichnet, dass**
die Druckspeichereinrichtung gleichzeitig mit dem Aufblasen des Luftsacks (10) unter Druck setzbar ist.

6. Vorrichtung nach zumindest einem der vorstehenden Ansprüche,
**dadurch gekennzeichnet, dass**
die Druckspeichereinrichtung eine Druckkammer (28) umfasst, die mit durch den Gasgenerator (12) freigesetztem Gas befüllbar ist.

7. Vorrichtung nach Anspruch 6,
**dadurch gekennzeichnet, dass**
das Volumen der Druckkammer (28) entgegen der Rückstellkraft einer Federeinrichtung vergrößerbar ist.

8. Vorrichtung nach Anspruch 7,
**dadurch gekennzeichnet, dass**
die Federeinrichtung durch ein die Druckkammer zumindest abschnittsweise umgebendes elastisches Material gebildet ist.

9. Vorrichtung nach Anspruch 7,
**dadurch gekennzeichnet, dass**
die Druckkammer (28) durch zwei Lagen (18, 20) des Luftsacks (10) begrenzt ist, die zumindest bereichsweise durch ein elastisches Material (40) miteinander verbunden sind.

10. Vorrichtung nach einem der Ansprüche 6 bis 9,
**dadurch gekennzeichnet, dass**
die Druckkammer (28) durch mindestens einen Gaskanal mit dem Schutzbereich (24) des Luftsacks (10) verbunden ist.

11. Vorrichtung nach Anspruch 10,
**dadurch gekennzeichnet, dass**
ein Einwegeventil (30) in dem oder jedem Gaskanal vorgesehen ist, welches eine Gasströmung aus der Druckkammer (28) in den Schutzbereich (24) des Luftsacks (10) zulässt und eine Gasströmung in der umgekehrten Richtung verhindert.

12. Vorrichtung nach zumindest einem der vorstehenden Ansprüche,
**dadurch gekennzeichnet, dass**
die Druckspeichereinrichtung in einem Bereich des Luftsacks (10) angeordnet ist, der bei einem Unfall normalerweise keine unmittelbare Schutzfunktion zu erfüllen hat.
